## Europäisches Patentamt
## European Patent Office
## Office européen des brevets

(19)

(11) Veröffentlichungsnummer : **0 203 319**
B1

(12)

# EUROPÄISCHE PATENTSCHRIFT

(45) Veröffentlichungstag der Patentschrift :
22.02.89

(51) Int. Cl.⁴ : **B 60 G  3/26**, B 60 G  3/20

(21) Anmeldenummer : 86104643.1

(22) Anmeldetag : 04.04.86

(54) **Unabhängige Radaufhängung.**

(30) Priorität : 29.05.85 DE 3519204

(43) Veröffentlichungstag der Anmeldung :
03.12.86 Patentblatt 86/49

(45) Bekanntmachung des Hinweises auf die Patenterteilung : 22.02.89 Patentblatt 89/08

(84) Benannte Vertragsstaaten :
DE FR GB IT

(56) Entgegenhaltungen :
DE—A— 1 938 850
DE—C— 3 138 850
GB—A— 1 267 838
US—A— 3 819 202

(73) Patentinhaber : Dr.Ing.h.c. F. Porsche Aktiengesellschaft
Porschestrasse 42
D-7000 Stuttgart 40 (DE)

(72) Erfinder : Schaible, Walter, Dipl.-Ing. FH
Schaubertstrasse 73
D-7251 Hemmingen (DE)
Erfinder : Kolender, Hartmut, Dipl.-Ing. FH
Im Kreuzgarten 18
D-7141 Unterriexingen (DE)

## Beschreibung

Die Erfindung bezieht sich auf eine unabhängige Radaufhängung nach dem Oberbegriff des Anspruchs 1.

Es ist eine Radaufhängung bekannt geworden (DE-C-31 38 850), die jeweils zwei obere und untere Querlenkerarme umfaßt, durch welche eine Schwenkachse mit negativem Lenkrollenradius gebildet wird. Diese Achse ist durch einen radträgerseitigen oberen und unteren Gelenkpunkt festgelegt. Der untere Gelenkpunkt liegt zur Erzielung eines negativen Lenkrollenradius weit innerhalb der Radschüssel und beengt den Bauraum für eine Scheibenbremsanlage. Desweiteren wird durch die Lage dieses Gelenkpunkts die freie Wahl des Lenkrollenradius begrenzt, zumal der obere radträgerseitige Gelenkpunkt ebenfalls festgelegt ist und zu keiner wesentlichen Vergrößerung des Lenkrollenradius beitragen dürfte.

Der Erfindung liegt die Aufgabe zugrunde, eine unabhängige Radaufhängung für ein Kraftfahrzeug zu schaffen, mit der die räumliche Lage der Schwenkachse des Rades weitgehend frei wählbar ist, eine gute Einstellmöglichkeit des Nachlaufs ohne Sturz wesentlich zu beeinflussen möglich wird und auf das Rad einwirkende Längs- und Querkräfte unmittelbar zum Aufbau hin abstützbar sind.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Die mit der Erfindung hauptsächlich erzielten Vorteile bestehen darin, daß jeder erforderliche Lenkrollradius darstellbar ist, ohne den Spreizwinkel zu beeinflussen oder zu vergrößern. Das untere Gelenk der Querstrebe braucht, da es nicht unmittelbar zur Bildung der Drehachse herangezogen wird, nicht tief in der Radschüssel sondern mehr zur Fahrzeugmittenlängsachse hin angeordnet sein, wodurch die Felgenschüssel nicht so weit nach außen vorsteht, was auch eine Verringerung des Felgengewichts bewirkt.

Durch ein Einstellglied in der Längsstrebe ist es möglich, den Nachlauf zu verstellen, ohne den Sturz zu beeinflussen.

Ferner ist es möglich, das aufbauseitige Lager der Längslenkers mit einer Längselastizität zu versehen, ohne daß die Fahrgenauigkeit negativ beeinflußt wird.

Ein Ausführungsbeispiel der Erfindung ist in der Zeichnung dargestellt und wird im folgenden näher beschrieben.

Es zeigen

Fig. 1 eine Vorderansicht der Radaufhängung,

Fig. 2 eine Draufsicht der Radaufhängung gemaß Fig. 1 und

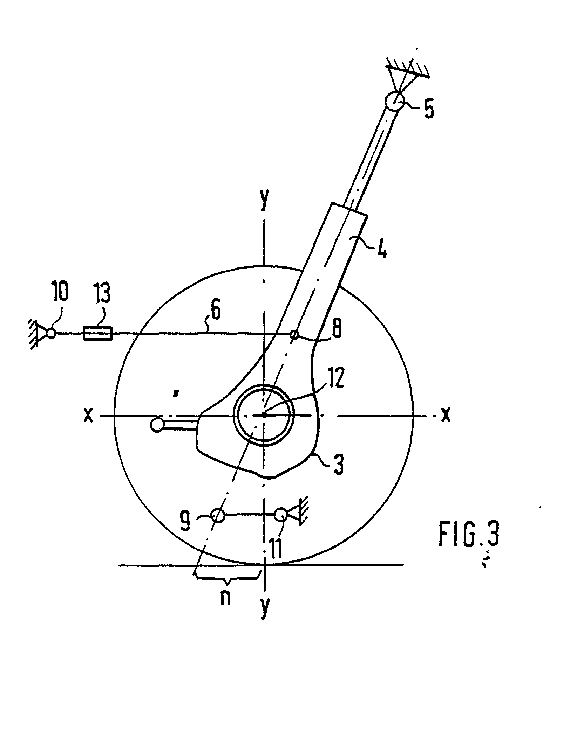

Fig. 3 eine Ansicht der Radaufhängung in Pfeilrichtung S gesehen.

Die Figuren der Zeichnungen zeigen eine unabhängige Radaufhängung 1 für ein gelenktes angetriebenes oder nicht angetriebenes Vorderrad 2.

Diese Radaufhängung 1 umfaßt im wesentlichen ein mit dem Radträger 3 fest verbundenes und aufbauseitig in einem Gelenkpunkt 5 gelagertes Federbein 4, sowie eine Längsstrebe 6 und eine Querstrebe 7. Diese Streben 6 und 7 sind über Gelenke 8 und 9 mit dem Radträger 3 verbunden und aufbauseitig in Lagern 10 und 11 abgestützt.

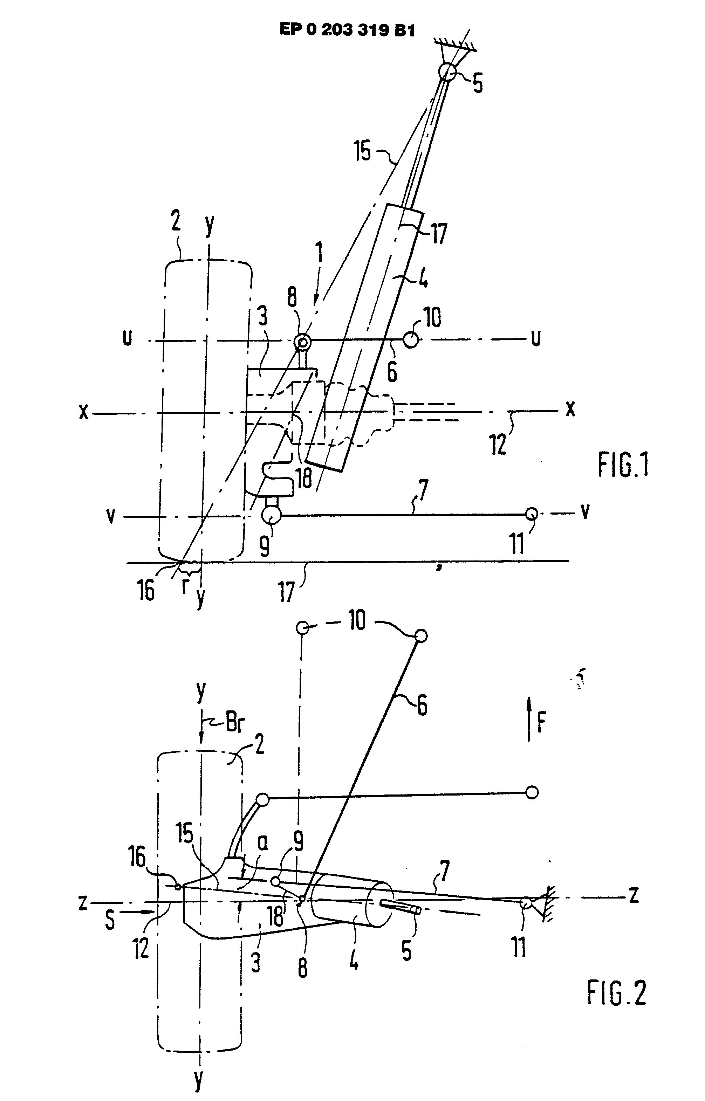

Die Längsstrebe 6 ist in Höhe einer durch die Raddrehachse 12 gelegten horizontalen Radmittenebene x-x oder darüber in einer ersten oberen horizontalen Ebene u-u angeordnet. Das radträgerseitige Gelenk 8 ist vorzugsweise — in bezug auf die Fahrtrichtung F — hinter einer senkrechten Radmittenquerebene z-z angeordnet und das aufbauseitige Lager 10 ist möglichst in einer parallel zur Radlängsebene y-y verlaufenden Ebene vorgesehen, wie es in gestrichelten Linien gezeigt wird. In Fig. 1 ist das aufbauseitige Lager 10 in Abweichung zum vorstehend beschriebenen, außerhalb dieser parallelen Ebene in ausgezogenen Linien dargestellt.

Zur Einstellung und Nachstellung eines Radnachlaufs n ist in der Längsstrebe 6 ein Längenverstellglied 13, wie z. B. ein Exzenter oder ein Gewindeelement, vorgesehen.

Das aufbauseitige Lager 10 der Längsstrebe 6 ist zur Komforterhöhung in Axialrichtung mit einer relativ weichen Kennung versehen. In Radialrichtung dagegen kann es zur sicheren Führung des Rades 2 relativ hart ausgeführt sein.

Die Querstrebe 7 ist in einer zweiten unteren Ebene v-v angeordnet und weist einen Verlauf vom radträgerseitigen Gelenk 9 bis zum aufbauseitigen Gelenkpunkt 5 etwa in der Radmittenquerebene z-z auf. Dieser Gelenkpunkt 5 liegt außerhalb des Rades 2 bzw. außerhalb des Radumrisses und ist — in bezug auf die Fahrtrichtung F — hinter oder um die Radmittenquerebene z-z vorgesehen.

Durch die Lager des aufbauseitigen Gelenkpunkt 5 und des Federbeines 4 und des radträgerseitigen Gelenks 8 der Längsstrebe 6 wird eine momentane ideelle Drehachse 15 gebildet, welche einen Radlenkpol 16 in der Ebene der Fahrbahn 17 darstellt. Dieser Radlenkpol 16 liegt — in bezug auf die Fahrtrichtung F — vor der senkrechten Radmittenquerebene z-z und außerhalb der senkrechten Radlängsebene y-y. Hierdurch wird bei Bremskräften Br und Seitenkräften S ein Invorspurgehen des Rades 2 erzielt, was insbesondere ein gewünschter Effekt an einer Hinterachse ist. Zum Lenken des Rades 2 ergibt sich eine ideelle Lenkungsdrehachse 18 etwa auf einer Verbindungsebene zwischen den radträgerseitigen Gelenken 8 und 9 der beiden Streben 6 und 7 und dem Gelenkpunkt 5 am Aufbau. Durch eine Veränderung der räumlichen Lage der Gelenke 8 und 9 bei einer Lenkbewegung des Rades, bildet sich eine sogenannte ideelle Lenkungsdrehachse 18, mit einer in Abhängigkeit von der Lenkbewegung, unterschiedlichen räumlichen Lage, was näher in Fig. 1dargestellt ist.

Vorzugweise werden die Streben 6 und 7 so im Bereich ihrer radträgerseitigen Gelenke 8 und 9 angeordnet, daß sie sich kreuzen, wie Fig. 2 näher zeigt. Hierdurch ergibt sich eine Abstützbasis mit dem Hebelarm a gegen Radkräfte. Die Streben 6 und 7 selbst sind vorzugsweise so verlaufend vorgesehen, daß sie zur optimalen Abstützung von auf das Rad 2 einwirkenden Kräften in Längs- und Querrichtung angeordnet sind und zwischen ihnen sich ein Winkel von etwa 90° ergibt.

**Patentansprüche**

1. Unabhängige Radaufhängung (1) für ein gelenktes Rad (2) eines Kraftfahrzeugs mit einem Radträger (3), der zur Führung des Rades bei Federungs- und Lenkbewegungen über ein Federbein (4) sowie Radführungsgliedern mit zwei unabhängig voneinander am Radträger angelenkten Streben (6, 7) am Fahrzeugaufbau verbunden ist und ein aufbauseitiger Gelenkpunkt (5) des Federbeines (4) sowie radträgerseitige Gelenkpunkte (8, 9) der Radführungsglieder eine ideelle momentane Schwenkachse (15) mit einem in Fahrbahnebene (17) gelegenen momentanen ideellen Radlenkpol (16) außerhalb der Spurweite bilden, dadurch gekennzeichnet, daß sich die Streben (Längsstrebe 6, Querstrebe 7) in verschiedenen, etwa oberhalb und unterhalb der Raddrehachse (12) verlaufenden, etwa horizontalen Ebenen (u-u ; v-v) erstrecken, wobei in der ersten oberen Ebene (u-u) die Längsstrebe (6) und in der darunter liegenden zweiten Ebene (v-v) die Querstrebe (7) angeordnet ist und daß zwischen den beiden radträgerseitigen Gelenken (8, 9) dieser Streben (6, 7) eine ideelle Lenkungsdrehachse (18) gebildet wird, die durch den aufbauseitigen Gelenkpunkt (5) des Federbeines (4) verläuft.

2. Radaufhängung nach Anspruch 1, dadurch gekennzeichnet, daß die Längsstrebe (6) in Fahrtrichtung (F) verlaufend angeordnet und am Radträger (3) nahe einer durch die Raddrehachse (12) gelegten horizontalen Radmittenebene (x-x) und — in bezug auf die Fahrtrichtung F — nahe einer senkrechten Radmittenquerebene (z-z) in dem Gelenk (8) gelagert ist.

3. Radaufhängung nach den Ansprüchen 1 oder 2, dadurch gekennzeichnet, daß das radträgerseitige Gelenk (8) der Längsstrebe (6) und der aufbauseitige Gelenkpunkt (5) des Federbeines (4) eine ideelle Achse (15) mit einem negativen Lenkrollhalbmesser (r) und einem Radlenkpol (16) vor der senkrechten Radmittenquerebene (z-z) und außerhalb einer senkrechten Radlängsebene (y-y) bilden.

4. Radaufhängung nach Anspruch 1 dadurch gekennzeichnet, daß die Längsstrebe (6) ein Längenverstellglied (13) zur Ein- und Nachstellung eines Radnachlaufs (n) aufweist.

5. Radaufhängung nach Anspruch 1, dadurch gekennzeichnet, daß das aufbauseitige Lager (10) der Längsstrebe (6) in Axialrichtung eine relativ weiche Kennung zur Bildung einer Längselastizität aufweist.

6. Radaufhängung nach einem oder mehreren der vorhergehenden Ansprüche, dadurch gekennzeichnet, daß das radträgerseitige Gelenk (9) der Querstrebe (7) — in bezug auf die Fahrtrichtung F — nahe der senkrechten Radmittenquerebene (z-z) im Bereich des Radumrisses angeordnet ist.

7. Radaufhängung nach einem oder mehreren der vorhergehenden Ansprüche, dadurch gekennzeichnet, daß sich die Längsstrebe (6) und die Querstrebe (7) im Bereich der Gelenke (8, 9) am Radträger (3) — in bezug auf die Fahrtrichtung F — kreuzen, derart, daß sich eine Abstützbasis (a) für auf das Rad (2) einwirkende Kräfte zwischen den beiden Streben (6 und 7) ergibt.

**Claims**

1. Independent wheel suspension (1) for a steered wheel (2) of a motor vehicle having a wheel carrier (3) which, for guiding the wheel on the occurrence of spring and steering movements, is connected to the vehicle body via a spring leg (4) and wheel guiding elements by means of two struts (6, 7), which are coupled independently of one another to the wheel carrier, and a vehicle body-side pivot point (5) of the spring leg (4) and wheel carrier-side pivot points (8, 9) of the wheel guiding elements form an ideal instantaneous pivot axis (15) having an instantaneous ideal wheel steering pole (16) located in the roadway plane (17) outside the tread, characterised in that the struts (longitudinal strut 6, transverse strut (7) extend in different, approximately horizontal planes (u-u ; v-v) extending approximately above and below the axis (12) of wheel rotation, the longitudinal strut (6) being arranged in the first upper plane (u-u) and the transverse strut (7) being arranged in the second plane (v-v) located below it, and in that an ideal steering axis (18) of rotation is formed between the two wheel carrier-side pivots (8, 9) of these struts (6, 7), which ideal steering axis (18) of rotation extends through the vehicle body-side pivot point (5) of the spring leg (4).

2. Wheel suspension according to Claim 1, characterised in that the longitudinal strut (6) is arranged extending in the direction of travel (F) and is mounted on the wheel carrier (3) close to a horizontal wheel central plane (x-x) located through the axis (12) of wheel rotation, and is mounted in the pivot (8) close (with respect to the direction of travel (F) to a perpendicular wheel central transverse plane (z-z).

3. Wheel suspension according to Claims 1 or 2, characterised in that the wheel carrier-side pivot (8) of the longitudinal strut (6) and the vehicle body-side pivot point (5) of the spring leg (4) form an ideal axis (15) with a negative steering roll radius (r) and a wheel steering pole (16) in front of the perpendicular wheel central transverse plane (z-z) and outside a perpendicular wheel longitudinal plane (y-y).

4. Wheel suspension according to Claim 1, characterised in that the longitudinal strut (6) has a longitudinal adjusting element (13) for adjusting and readjusting a wheel castor length (n).

5. Wheel suspension according to Claim 1, characterised in that the vehicle body-side bearing (10) of the longitudinal strut (6) has a relatively soft characteristic in the axial direction to form a longitudinal elasticity.

6. Wheel suspension according to one or more of the preceding claims, characterised in that the wheel carrier-side pivot (9) of the transverse strut (7) is arranged (seen in the direction of travel F) close to the perpendicular wheel central transverse plane (z-z) in the region of the wheel outline.

7. Wheel suspension according to one or more of the preceding claims, characterised in that the longitudinal strut (6) and the transverse strut (7) cross (with respect to the direction of travel F) in the region of the pivots (8, 9) on the wheel carrier (3) in such a manner that a support base (a) is formed for forces acting on the wheel (2) between the two struts (6 and 7).

**Revendications**

1. Suspension indépendante (1) pour une roue articulée (2) d'un véhicule automobile, comprenant un support de roue (3) qui est relié à la caisse du véhicule pour guider la roue pendant des mouvements de la suspension et de la direction par l'intermédiaire d'une jambe de force à ressort (4) ainsi que d'organes de guidage de roue constitués par deux entretoises (6, 7) articulées indépendamment l'une de l'autre sur le support de roue, et un point d'articulation (5) de la jambe de force à ressort (4) sur la caisse ainsi que des points d'articulation (8, 9) des organes de guidage de roue sur le support de roue formant un axe de pivotement momentané idéal (15) avec un pôle de direction de roue idéal et momentané (16) situé dans le plan de la voie (17) en dehors de l'écartement des roues, caractérisée en ce que les entretoises (entretoise longitudinale 6, entretoise transversale 7) s'étendent dans des plans sensiblement horizontaux (u-u, v-v) différents et disposés un peu au-dessus et au-dessous de l'axe de rotation (12) de la roue, l'entretoise longitudinale (6) étant disposée dans le premier plan supérieur (u-u) et l'entretoise transversale (7) dans le second plan (v-v) situé au-dessous, et en ce qu'entre les deux articulations (8, 9) de ces entretoise (6, 7) qui sont montées sur le support de roue est formé un axe de rotation de braquage idéal (18) passant par le point d'articulation (5) de la jambe de force à ressort (4) sur la caisse.

2. Suspension de roue selon la revendication 1, caractérisée en ce que l'entretoise longitudinale (6) est disposée dans le sens de la marche (F) et est montée par l'articulation (8) sur le support de roue (3) à proximité d'un plan médian horizontal (x-x) de la roue passant par l'axe de rotation (12) de la roue et — par rapport au sens de la marche F — à proximité d'un plan transversal médian et vertical (z-z) de la roue.

3. Suspension de roue selon la revendication 1 ou 2, caractérisée en ce que l'articulation (8) de l'entretoise longitudinale (6) montée sur le support de roue et le point d'articulation (5) de la jambe de force à ressort (4) monté sur la caisse forment un axe idéal (15) avec un demi-diamètre de déport au sol négatif (r) et un pôle de direction de roue (16) à l'avant du plan transversal médian et vertical (z-z) de la roue et à l'extérieur d'un plan longitudinal vertical (y-y) de la roue.

4. Suspension de roue selon la revendication 1, caractérisée en ce que l'entretoise longitudinale (6) comprend un organe de réglage en longueur (13) pour le réglage initial et les rattrapages ultérieurs de la chasse (n) de la roue.

5. Suspension de roue selon la revendication 1, caractérisée en ce que le palier (10) de l'entretoise longitudinale (6) monté sur la caisse présente en direction axiale une caractéristique relativement élastique pour constituer une élasticité longitudinale.

6. Suspension de roue selon l'une quelconque ou plusieurs des revendications précédentes, caractérisée en ce que l'articulation (9) de l'entretoise transversale (7) qui est montée sur le support de roue est disposée — par rapport au sens de la marche F — au voisinage du plan transversal médian vertical (z-z) de la roue dans la région du pourtour de la roue.

7. Suspension de roue selon l'une quelconque ou plusieurs des revendications précédentes, caractérisée en ce que l'entretoise longitudinale (6) et l'entretoise transversale (7) se croisent — par rapport au sens de la marche F — dans la région des articulations (8, 9) sur le support de roue (3), de manière à constituer une base d'appui (a) pour les forces agissant sur la roue (2) entre les deux entretoises (6 et 7).

FIG.1

FIG.2

1

FIG.3